# EUROPEAN PATENT APPLICATION

(11) **EP 3 575 575 A1**
(43) Date of publication of application: **04.12.2019**
(21) Application number: 19172089.5
(22) Date of filing: 01.05.2019
(51) Int. Cl.: F02C 6/08, F01D 9/06, F04D 27/02

(54) **A GAS TURBINE ENGINE BLEED DUCT**

(30) Priority: 31.05.2018 GB 201808853
(71) Applicant: Rolls-Royce plc, London SW1E 6AT (GB)
(72) Inventor: Peace, Richard, Derby, Derbyshire DE24 8BJ (GB); Goulds, Robert, Derby, Derbyshire DE24 8BJ (GB)
(74) Representative: Rolls-Royce plc

(57) **Abstract**

A single-piece gas turbine engine bleed duct for a gas turbine engine (10) comprising:
a main airflow conduit configured to transmit a bleed flow to a location outside the gas turbine engine;
a pressure regulating valve for regulating airflow through the main airflow conduit;
a first inlet duct for directing airflow to the main airflow conduit and toward the pressure regulating valve, the first inlet duct comprising a non-return valve; and
a second inlet duct for directing airflow to the main airflow conduit and toward the pressure regulating valve, the second inlet duct comprising a control valve;
wherein each of the first and second inlet ducts are directly connectable to an engine casing of a gas turbine engine (10).

## Description

The present disclosure relates to a gas turbine engine bleed duct, and more particularly to a single-piece gas turbine engine bleed duct for a gas turbine engine.

### Background

Typically, a portion of compressed air in a gas turbine engine for an aircraft does not enter the combustion equipment of the gas turbine engine, but is instead redirected as "bleed air" to other areas of the aircraft. Because the ambient air at high altitudes is too thin to contain enough oxygen to be fit for human inhalation, bleed air is sometimes cooled and directed to the aircraft's environmental control system where it is used to air-condition and pressurise the cabin. Due to its relatively high temperature, bleed air can also be used to de-ice parts of the aircraft.

To provide bleed air from the gas turbine engine, ducts may be used to redirect air from the compressor stage of the gas turbine engine to other areas of the aircraft.

### Statements of Invention

According to a first aspect there is provided a single-piece gas turbine engine bleed duct for a gas turbine engine comprising: a main airflow conduit configured to transmit a bleed flow to a location outside the gas turbine engine; a first inlet duct for directing airflow to the main airflow conduit; and a second inlet duct for directing airflow to the main airflow conduit; wherein each of the first and second inlet ducts are directly connectable to an engine casing of a gas turbine engine.

The single-piece gas turbine engine bleed duct may be for a gas turbine engine for an aircraft. The single-piece gas turbine engine bleed duct may provide bleed air to the aircraft.

At least one of the main airflow conduit, the first inlet duct and the second inlet duct may comprise a valve for regulating airflow therethrough. For example, the main airflow conduit may comprise a pressure regulating valve for regulating airflow through the main airflow conduit. Alternatively, or additionally, the first inlet duct may comprise a non-return valve. Alternatively, or additionally, the second inlet duct may comprise a control valve.

The pressure regulating valve may be a pressure regulating shut-off valve. The control valve may be a shut-off valve, e.g. a high pressure shut-off valve. The non-return valve may be a flapper valve.

At least one of the control valve and the pressure-regulating valve may be fueldraulically or hydraulically actuated.

At least one of the control valve and the pressure-regulating valve may be electrically actuated via a motor.

According to the invention there may be provided a gas turbine engine for an aircraft comprising: an engine core comprising a turbine, a compressor, and a core shaft connecting the turbine to the compressor; a fan located upstream of the engine core, the fan comprising a plurality of fan blades; and the single-piece gas turbine engine bleed duct as described above.

The turbine may be a first turbine, the compressor may be a first compressor, and the core shaft may be a first core shaft; the engine core may further comprise a second turbine, a second compressor, and a second core shaft connecting the second turbine to the second compressor; and the second turbine, second compressor, and second core shaft may be arranged to rotate at a higher rotational speed than the first core shaft.

The first inlet duct may be connected to the first compressor and the second inlet duct may be connected to the second compressor. In an alternative example, each of the first and second inlet ducts may be connected to the first or second compressor, the first inlet duct being positioned upstream of the second inlet duct. In this way, the first inlet duct may receive air at a lower pressure than the second inlet duct.

The gas turbine engine may further comprise a nacelle and a bypass duct defined by the nacelle and surrounding the engine core, and the single-piece gas turbine engine bleed duct may be located within the bypass duct. At least a part of the main airflow conduit of the single-piece gas turbine engine bleed duct may be located within the bypass duct. At least one of the valves of the single-piece gas turbine engine bleed duct may be located within the bypass duct. In one example, the pressure regulating valve, the control valve, and the non-return valve are located within the bypass duct.

The engine core may comprise a first air plenum chamber containing air at a first pressure and a second air plenum chamber containing air at a second pressure, the first pressure may be lower than the second pressure, and the first inlet duct may be connected to the first air plenum chamber and the second inlet duct may be connected to the second air plenum chamber. The first air plenum chamber may be connected to, or may be part of, the first compressor and the second air plenum chamber may be connected to, or maybe part of, the second compressor.

The gas turbine engine may comprise a first actuator to actuate the pressure regulating valve and a second actuator to actuate the control valve. At least one of the first and second actuators may be controllable from a location outside the gas turbine engine. The first actuator may comprise a first servo motor connected to a first linkage, wherein the first linkage may be to actuate the pressure regulating valve and the second actuator may comprise a second servo motor connected to a second linkage, wherein the second linkage may be to actuate the control valve. In one example, at least one of the first and second linkages may comprise a bellcrank.

Each actuator may be connected to a pressure source and may be pneumatically controlled.

The gas turbine engine may further comprise an actuator plate connected to the single-piece gas turbine engine bleed duct and each actuator may be connected to the actuator plate.

The gas turbine engine may further comprise a casing for the engine core, and the first and second inlet ducts may be located within the casing for the engine core.

At least a portion of the main air conduit may be located within the casing for the engine core.

A single duct may transmit bleed flow through a bypass duct, bypassing the engine core.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹ s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a sectional side view of a single-piece gas turbine engine bleed duct;
Figure 4 is a sectional side view of a gas turbine engine comprising a single-piece gas turbine engine bleed duct; and
Figure 5 is a sectional side view of an example actuating mechanism for a single-piece gas turbine engine bleed duct.

### Detailed Description

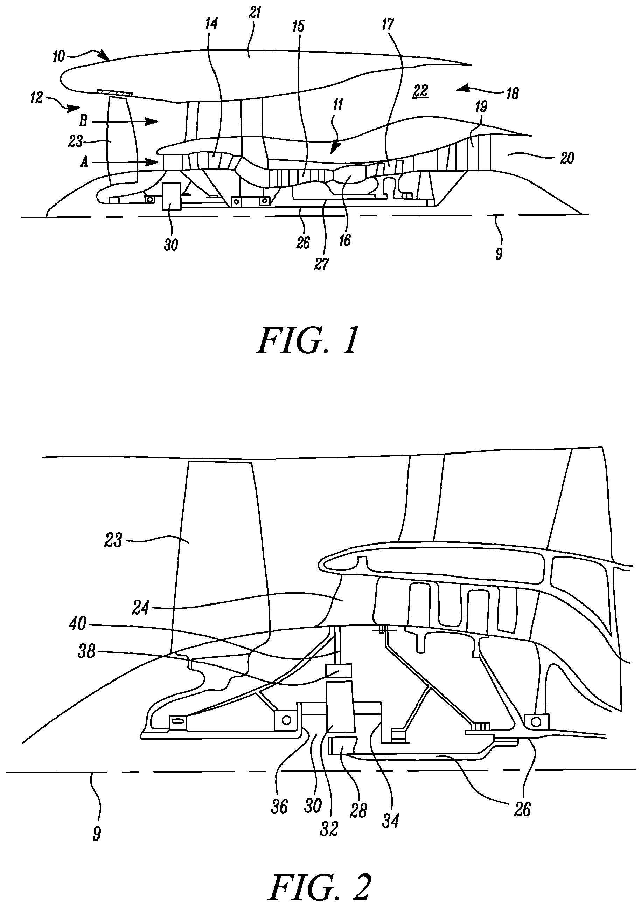

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an optional epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

It will be appreciated that the arrangement shown in Figure 2 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

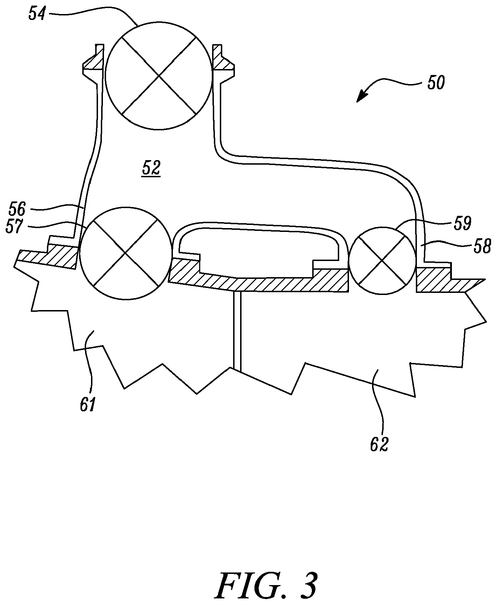

Referring now to Figure 3 there is shown a single-piece gas turbine engine bleed duct 50 for the gas turbine engine 10. The single-piece gas turbine engine bleed duct 50 comprises a main airflow conduit 52 configured to transmit a bleed air flow to a location outside the gas turbine engine 10, and a pressure regulating valve 54 for regulating airflow through the main airflow conduit 52. The single-piece gas turbine engine bleed duct 50 also comprises a first inlet duct 56 for directing airflow to the main airflow conduit 52 and toward the pressure regulating valve 54, and a second inlet duct 58 for directing airflow to the main airflow conduit 52 and toward the pressure regulating valve 54. The first inlet duct 56 comprises a non-return valve 57. The second inlet duct 58 comprises a control valve 59. Each of the first and second inlet ducts 56, 58 are directly connectable to an engine casing of the gas turbine engine 10.

Each of the valves may be actuatable between a closed positon, preventing air flow through their respective ducts, and an open position, permitting airflow through their respective ducts. As will be described below the pressure regulating valve and control valve may be actuated by an actuator between open and closed positions. The non-return valve may be a passively-actuated valve.

The pressure regulating valve 54 may be a pressure regulating shut-off valve to throttle air flow through the main airflow conduit 52 of the single-piece gas turbine engine bleed duct 50. The control valve 59, in one example, may be a high-pressure shut-off valve and the second inlet duct 58 may be connected to a high-pressure air chamber. The control valve 59 may be to meet the demands of the aircraft at low power. The non-return valve 57 may be to reduce the risk of re-ingestion of air back into part of the engine casing, or the engine core 11, of the gas turbine engine 10. Accordingly the control valve 59 may be an air-modulating high pressure control valve and the non-return valve 57 may be a passive non-return valve. The non-return valve 57 may be connected to a low-pressure air chamber. In one example the non-return valve 57 may be a flapper valve, for example a spring-balanced flap. In one example the pressure regulating valve 54 and the control valve 59 may be controlled by a part of an airframe using at least one of a pneumatic force or an electrical current.

As shown in Figure 3, the first inlet duct 56 is connected to a first air plenum chamber 61 which contains air at a first pressure, and the second inlet duct 58 is connected to a second air plenum chamber 62 which contains air at a second pressure. The first pressure is lower than the second pressure and so the first air plenum chamber 61 may be regarded as a low-pressure plenum chamber and the second air plenum chamber 62 may be regarded as a high-pressure plenum chamber.

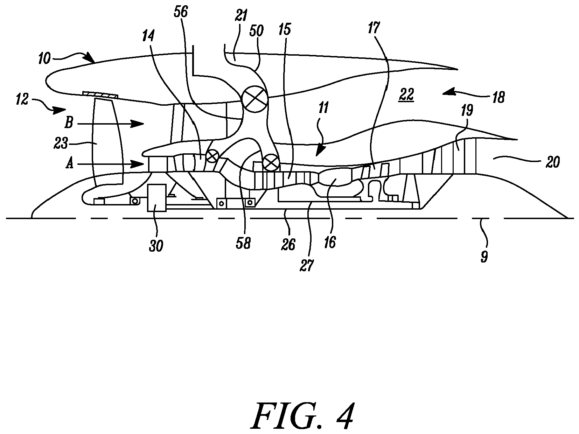

Referring now to Figure 4, the gas turbine engine 10 comprises the single-piece gas turbine engine bleed valve 50. As shown in Figure 4, the first inlet duct 56 is connected to the low pressure compressor 14 and the second inlet duct 58 is connected to the high pressure compressor 15. In other examples, the first and second inlet ducts 56, 58 may be connected to the same compressor but at different relative positions upstream/downstream of the airflow through the compressor. For example the first inlet duct 56 may be connected to a compressor upstream of the second inlet duct 58 so as to receive air at a lower pressure than the second inlet duct 58.

The first air plenum chamber 61 may be part of the low pressure compressor 14 of the gas turbine engine 10 and the second air plenum chamber 62 may be part of the high pressure compressor 15 of the gas turbine engine 10.

The single-piece gas turbine engine bleed valve 50 may be utilised to take air from the low pressure compressor 14, via the first inlet duct 56, and from the high pressure compressor 15, via the second inlet duct 58. Bleed air from the low pressure compressor 14 may be used when the engine is operating at high power and bleed air from the high pressure compressor 15 may be used when the engine is operating at low power.

Accordingly, during a "normal" or high power operation, the control valve 59 may be in a closed configuration and airflow may flow from a low-pressure air plenum chamber 61 and through the first inlet duct 56 where it is directed to flow through the main airflow conduit 52 and to another part of the aircraft. Flow through the main airflow conduit 52 is regulated by the pressure regulating valve 54, During a low power operation, the control valve 59 may be in an open configuration to permit airflow from a high-pressure air plenum chamber 62 and through the second inlet duct 58 where it is directed to flow through the main airflow conduit 52 and to another part of the aircraft. Air flow back through the first inlet duct 57 is prevented by the non-return valve 57.

As is also shown in Figure 4, the single-piece gas turbine engine bleed 50 is located within the bypass duct 22 of the gas turbine engine. At least one of the pressure regulating valve, the control valve, and the non-return valve is therefore located in the bypass duct 22. In another example the single-piece gas turbine engine bleed duct 50 is located within a casing 51 for the engine core 11. At least one of the pressure regulating valve, the control valve, and the non-return valve may be within the casing 51. In another example, at least a portion of the main air flow conduit 52 is located in the casing 51.

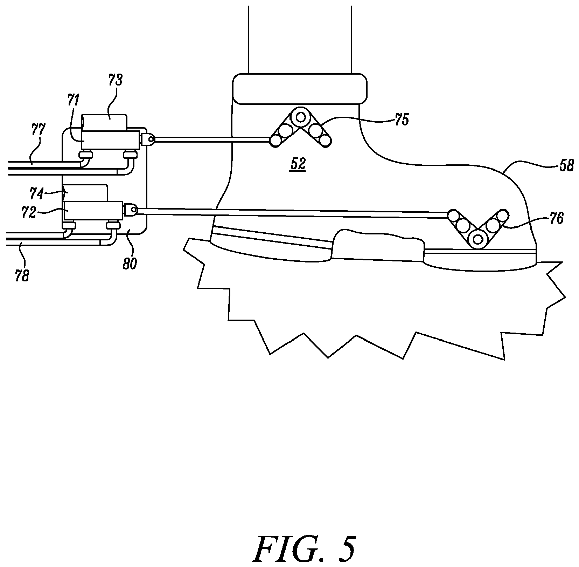

Referring now to Figure 5 there is shown an example actuation mechanism for the single-piece gas turbine engine bleed duct 50. Specifically there is shown a mechanism for actuating the pressure regulating valve (not shown) and the non-return valve (not shown). A first actuator 71 is provided to actuate the pressure regulating valve and a second actuator 72 is provided to actuate the control valve. The actuators may be located outside the gas turbine engine 10.

The first actuator 71 comprises a first servo motor 73 connected to a first linkage 75. The first linkage 75 is to actuate the pressure regulating valve. The first linkage 75 may be a multi-positional linkage, moveable between a range of positions, and movement of the linkage between two positions may cause the pressure regulating valve to transition between an open and a closed position, permitting or prevent airflow through the main inlet conduit 52, respectively.

The second actuator 72 comprises a second servo motor 74 connected to a second linkage 76. The second linkage 76 is to actuate the control valve. The second linkage 76 may be a multi-positional linkage, moveable between a range of positions, and movement of the linkage between two positions may cause the control valve to transition between an open and a closed position, permitting or prevent airflow through the second inlet duct 58, respectively.

The first and second linkages 75, 76 are each depicted as a bellcrank.

Each of the first and second actuators 71, 72 is hydraulically, fueldraulically or pneumatically actuatable. The first actuator 71 is connected to a first pressure source line 77 and the second actuator is connected to a second pressure soruce line 78. The pressure source lines 77, 78 may be configured to house and transmit liquid (e.g. fuel) or gas for actuating the first and second bellcranks 75, 76.

The gas turbine engine 10 comprises an actuator plate 80. Each of the first and second actuators 71, 72 are connected to the actuator plate 80. For example they may be mounted on the actuator plate. The actuator plate may be connected to the single-piece gas turbine engine bleed duct 50.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A single-piece gas turbine engine bleed duct (50) for a gas turbine engine (10) comprising:
a main airflow conduit (52) configured to transmit a bleed flow to a location outside the gas turbine engine (10);
a first inlet duct (56) for directing airflow to the main airflow conduit (52); and
a second inlet duct (58) for directing airflow to the main airflow conduit (52);
wherein each of the first and second inlet ducts (56, 58) are directly connectable to an engine casing (51) of a gas turbine engine (10).

2. The single-piece gas turbine engine bleed duct (50) of claim 1, wherein at least one of the main airflow conduit (52), the first inlet duct (56) and the second inlet duct (58) comprises a valve for regulating airflow therethrough.

3. The single-piece gas turbine engine bleed duct (50) of claim 2, wherein the main airflow conduit (52) comprises a pressure regulating valve (54) for regulating airflow through the main airflow conduit (52).

4. The single-piece gas turbine engine bleed duct (50) of claim 2 or 3, wherein the first inlet duct (56) comprises a non-return valve (57).

5. The single-piece gas turbine engine bleed duct (50) of any of claims 2-4, wherein the second inlet duct (58) comprises a control valve (59).

6. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
the single-piece gas turbine engine bleed duct (50) of any of claims 1-5.

7. The gas turbine engine of claim 6, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

8. The gas turbine engine (10) of claim 6 or 7, further comprising a nacelle (21) and a bypass duct (22) defined by the nacelle (21) and surrounding the engine core (11), and wherein at least part of the main airflow conduit (52) of the the single-piece gas turbine engine bleed duct (50) is located within the bypass duct (22).

9. The gas turbine engine (10) of any of claims 6-8, wherein the engine core (11) comprises a first air plenum chamber (61) containing air at a first pressure and a second air plenum chamber (62) containing air at a second pressure, the first pressure being lower than the second pressure, and wherein the first inlet duct (56) is connected to the first air plenum chamber (61) and the second inlet duct (58) is connected to the second air plenum chamber (62).

10. The gas turbine engine (10) of any of claims 6-9, further comprising a first actuator (71) to actuate the pressure regulating valve (54) and a second actuator (72) to actuate the control valve (59).

11. The gas turbine engine (10) of claim 10, wherein the first actuator (10) comprises a first servo motor (73) connected to a first linkage (75), wherein the first linkage (75) is to actuate the pressure regulating valve (54) and wherein the second actuator (72) comprises a second servo motor (74) connected to a second linkage (76), wherein the second linkage (76) is to actuate the control valve (59).

12. The gas turbine engine (10) of claim 10 or claim 11, wherein each actuator (71, 72) is connected to a pressure source (77, 78) and is pneumatically controlled.

13. The gas turbine engine (10) of any of claims 10-12, further comprising an actuator plate (80) connected to the single-piece gas turbine engine bleed duct (50) and wherein each actuator (71, 72) is connected to the actuator plate (80).

14. The gas turbine engine of any of claims 6-13, further comprising a casing (51) for the engine core (11), wherein the first and second inlet ducts (56, 58) are located within the casing (51) for the engine core (11).

15. The gas turbine engine (10) of any of claims 6-14, wherein a single duct transmits bleed flow through a bypass duct (22), bypassing the engine core (11).
